# EUROPÄISCHE PATENTSCHRIFT

(11) **EP 4 352 538 B1**
(45) Veröffentlichungstag und Bekanntmachung des Hinweises auf die Patenterteilung: **24.07.2024**
(21) Anmeldenummer: 22737635.7
(22) Anmeldetag: 28.06.2022
(51) Int. Cl.: G01S 7/497, G01S 13/58, G01S 13/931, G01S 17/42, G01S 17/931

(54) **VERFAHREN UND VORRICHTUNG ZUR DETEKTION EINER DEKALIBRIERUNG EINES SENSORS ZUR ERFASSUNG DER UMGEBUNG EINES FAHRZEUGS**
METHOD AND DEVICE FOR DETECTING A DECALIBRATION OF A SENSOR FOR CAPTURING THE SURROUNDINGS OF A VEHICLE
PROCÉDÉ ET DISPOSITIF POUR DÉTECTER UN DÉCALIBRAGE D'UN CAPTEUR POUR DÉTECTER L'ENVIRONNEMENT D'UN VÉHICULE

(30) Priorität: 06.08.2021 DE 102021004061
(43) Veröffentlichungstag der Anmeldung: 17.04.2024
(73) Patentinhaber: Mercedes-Benz Group AG, 70372 Stuttgart (DE)
(72) Erfinder: KREIDLER, Anna, 70597 Stuttgart (DE); MÜHLBRANDT, Sascha, 75446 Wiernsheim (DE); EPPLER, Florian, 71032 Böblingen (DE)
(74) Vertreter: Novagraaf Group
(86) Internationale Anmeldenummer: PCT/EP2022/067674
(87) Internationale Veröffentlichungsnummer: WO 2023/011807

(56) Entgegenhaltungen:
- US-A1- 2008 012 752
- US-A1- 2018 341 007

## Beschreibung

Die Erfindung betrifft ein Verfahren zur Detektion einer Dekalibrierung eines Sensors zur Erfassung der Umgebung eines Fahrzeugs gemäß dem Oberbegriff des Anspruchs 1. Die Erfindung betrifft ferner eine Vorrichtung zur Detektion einer Dekalibrierung eines Sensors zur Erfassung der Umgebung eines Fahrzeugs gemäß Anspruch 7 sowie ein Fahrzeug gemäß Anspruch 8.

Umgebungssensoren, beispielsweise für Kraftfahrzeuge, können plötzlichen Veränderungen in der Position und/oder Ausrichtung unterliegen, welche zu einer Degradation der Sensorleistung führen können. Insbesondere kann dies zu fehlerhaften Perzeptionsdaten führen. Im Hinblick auf hochautomatisierte und/oder autonome Fahrzeugsysteme kann eine nicht entdeckte plötzliche Veränderung zu ungewollten Fahrzeugeingriffen führen und/oder benötigte Fahrzeugeingriffe verhindern.

Eine Detektion von plötzlichen Veränderungen der Position und/oder Ausrichtung eines Umgebungssensors ist deshalb wünschenswert.

Im Stand der Technik wird die Orientierung des Sensors auf Basis einer zeitlichen Mittelung der Perzeptionsdaten festgestellt. Dazu verwendete algorithmische Methoden sind inhärent langsam im Vergleich zur Updaterate der Perzeptionsdaten. Aufgrund großer Filterkonstanten kann insbesondere eine plötzliche Veränderung der Sensorausrichtung im Vergleich zur Fahrzeugachse nicht unmittelbar festgestellt werden.

Die DE 10 2021 000 360 A1 beschreibt eine Vorrichtung zur Erkennung einer Dekalibrierung einer Kamera. Dabei ist ein Bildsensor mittels zumindest einer Aufhängung an einem Rahmen befestigt. Weiterhin ist an dem Rahmen zumindest ein elektrischer Kondensator angeordnet, welcher bei einer Deaktivierung der Kamera voll aufgeladen ist. Es ist eine Auswerteeinheit vorgesehen, welche ausgebildet ist, bei einer Aktivierung der Kamera eine Ladung des Kondensators zu ermitteln, weiterhin zu überprüfen, ob die ermittelte Ladung einem erwarteten Wert entspricht und bei Feststellung einer Abweichung zwischen der ermittelten Ladung und dem erwarteten Wert auf eine Dekalibrierung der Kamera zu schließen und/oder bei Feststellung der Abweichung eine entsprechende Information auszugeben. US 2008/012752 A1 offenbart ein Verfahren zur Detektion einer Dekalibrierung mindestens eines Umgebungssensors zur Erfassung der Umgebung eines Fahrzeugs, wobei mit dem Umgebungssensor eine Vielzahl von Objekten in der Umgebung detektiert wird und Geschwindigkeiten der detektierten Objekte mittels einer statistischen Auswertung während der Fahrt des Fahrzeugs ermittelt werden. US 2018/341007 A1 stellt ein trackingbasiertes Verfahren zur Detektion einer Dekalibrierung mindestens eines Umgebungssensors zur Erfassung der Umgebung eines Fahrzeugs vor. Auch hier werden keine Winkelgeschwindigkeiten von Detektierten Objekten detektiert.

Der Erfindung liegt die Aufgabe zu Grunde, ein Verfahren und eine Vorrichtung zur Detektion einer Dekalibrierung eines Sensors zur Erfassung der Umgebung eines Fahrzeugs sowie ein Fahrzeug anzugeben.

Die Aufgabe wird erfindungsgemäß gelöst durch ein Verfahren mit den Merkmalen des Anspruchs 1, durch eine Vorrichtung mit den Merkmalen des Anspruchs 7 und durch ein Fahrzeug mit den Merkmalen des Anspruchs 8.

Vorteilhafte Ausgestaltungen der Erfindung sind Gegenstand der Unteransprüche.

Die Erfindung betrifft ein Verfahren zur Detektion einer Dekalibrierung eines Sensors zur Erfassung der Umgebung eines Fahrzeugs.

Erfindungsgemäß wird mit dem Umgebungssensor eine Vielzahl von Objekten in der Umgebung detektiert. Winkelgeschwindigkeiten der detektierten Objekte werden während der Fahrt des Fahrzeugs ermittelt, wobei mittels einer Histogrammauswertung Häufungen einer Anzahl der Objekte bezogen auf die Winkelgeschwindigkeiten ermittelt werden, wobei dann, wenn eine Häufung abseits einer Winkelgeschwindigkeit von Null festgestellt wird, auf eine Dekalibrierung des Umgebungssensor geschlossen wird, die durch eine Abweichung der Ausrichtung des Umgebungssensors aus einer Normallage zu einer Fahrzeugachse des Fahrzeugs bedingt ist.

Die vorliegende Erfindung erlaubt eine unmittelbare Detektion von plötzlichen Veränderungen der Position und/oder Ausrichtung eines Umgebungssensors. Die Entdeckungszeit ist nur begrenzt durch die Zykluszeit des Sensors.

Daraus entstehen die folgenden Vorteile:
- Verkürzung der Detektionszeit von Veränderungen in Position und/oder Ausrichtung eines Umgebungssensors,
- Vermeidung sicherheitsrelevanter Falscheingriffe in die Fahrzeugsteuerung, und
- Erhöhung der Entdeckungs-Konfidenz von Veränderungen in Position und/oder Ausrichtung eines Umgebungssensors.

In einer Ausführungsform wird als Winkelgeschwindigkeit eines oder mehrere aus einer Gierwinkelgeschwindigkeit, einer Nickwinkelgeschwindigkeit und einer Rollwinkelgeschwindigkeit ermittelt und der Histogrammauswertung unterzogen.

In einer Ausführungsform erfolgt die Ermittlung der Winkelgeschwindigkeiten der detektierten Objekte durch einen Vergleich von Bewegungsdaten des Fahrzeugs mit vom Umgebungssensor erfassten oder davon abgeleiteten Daten.

In einer Ausführungsform werden bzw. wird als Umgebungssensor ein Lidar und/oder ein Radar und/oder eine Kamera und/oder ein Ultraschallsensor verwendet.

In einer Ausführungsform werden als Bewegungsdaten des Fahrzeugs eines oder mehrere aus der folgenden Liste verwendet: ein Lenkwinkel, ein Gierwinkel, ein Rollwinkel, ein Nickwinkel, eine Gierbeschleunigung, eine Rollbeschleunigung, eine Nickbeschleunigung, Federwegsignale, Raddrehzahlimpulse, Ortungsdaten und redundante Umfeldsensorik.

In einer Ausführungsform werden bzw. wird als redundante Umfeldsensorik ein Lidar und/oder ein Radar und/oder eine Kamera und/oder ein Ultraschallsensor verwendet.

Gemäß einem Aspekt der vorliegenden Erfindung wird eine Vorrichtung zur Detektion einer Dekalibrierung mindestens eines Umgebungssensors zur Erfassung der Umgebung eines Fahrzeugs vorgeschlagen, umfassend eine Datenverarbeitungseinheit, die mit dem mindestens einen Umgebungssensor verbunden und zur Durchführung eines der oben beschriebenen Verfahren konfiguriert ist.

Gemäß einem weiteren Aspekt der vorliegenden Erfindung wird ein Fahrzeug vorgeschlagen, umfassend eine solche Vorrichtung und mindestens einen Umgebungssensor zur Erfassung der Umgebung des Fahrzeugs.

In einer Ausführungsform sind bzw. ist als Umgebungssensor ein Lidar und/oder ein Radar und/oder eine Kamera und/oder ein Ultraschallsensor vorgesehen.

In einer Ausführungsform sind zur Erfassung der Bewegungsdaten des Fahrzeugs ein oder mehrere Sensoren zur Erfassung eines oder mehrerer Daten aus der folgenden Liste vorgesehen: ein Lenkwinkel, ein Gierwinkel, ein Rollwinkel, ein Nickwinkel, eine Gierbeschleunigung, eine Rollbeschleunigung, eine Nickbeschleunigung, Federwegsignale, Raddrehzahlimpulse, Ortungsdaten und eine redundante Umfeldsensorik.

Um Degradation zu vermeiden, schlägt die vorliegende Erfindung einen unmittelbaren Vergleich der Daten verschiedener Sensoren, insbesondere der verfügbaren Fahrzeug-Bewegungsdaten und der erkannten Sensordaten vor. Beide Datenquellen stellen im Normalbetrieb dieselbe Information über die Ausrichtung des Fahrzeugs und der Sensoren redundant bereit, das heißt ohne Fehlausrichtung zwischen den beiden Ausrichtungen. Eine Änderung der Sensorausrichtung manifestiert sich in einem Versatz zwischen den beiden Datenquellen bezüglich der extrahierten Ausrichtung. Diese Veränderung kann unmittelbar detektiert werden, sobald die Eingangsdaten zur Verarbeitung verfügbar sind. Die Empfindlichkeit wird durch die Schwellwerte limitiert, die für den erlaubten Versatz gewählt wurden.

Mögliche Sensordaten sind eigene Perzeptionsdaten (beispielsweise eine Punktewolke eines Lidar, Radarecho, Kamerabilder, Ultraschallecho) und daraus abgeleitete Daten.

Mögliche Fahrzeugdatenquellen sind:
- Eigenbewegungsdaten des Fahrzeugs:
- Lenkwinkel,
- Gier-, Roll- und Nickwinkel inkl. zugehörige Beschleunigung,
- Federwegsignale,
- Raddrehzahlimpulse,
- Ortung (GPS, GNSS, Kartendaten usw.),
- redundante Umfeld-Sensorik (Radar, Kamera, Lidar, Ultraschall).

Ausführungsbeispiele der Erfindung werden im Folgenden anhand von Zeichnungen näher erläutert.

Dabei zeigen:
- Fig. 1: eine schematische Ansicht eines Fahrzeugs im Normalbetrieb,

- Fig. 2: eine schematische Ansicht des Fahrzeugs bei einer plötzlichen Änderung der Ausrichtung eines Umgebungssensors,
- Fig. 3: ein schematisches Histogramm zur Darstellung einer Verteilung einer Anzahl erkannter Objekte über unterschiedliche Winkelgeschwindigkeiten im Normalbetrieb des Fahrzeugs, und
- Fig. 4: ein schematisches Histogramm zur Darstellung einer Verteilung einer Anzahl erkannter Objekte über unterschiedliche Winkelgeschwindigkeiten bei plötzlicher Änderung der Ausrichtung des Umgebungssensors.

Einander entsprechende Teile sind in allen Figuren mit den gleichen Bezugszeichen versehen.

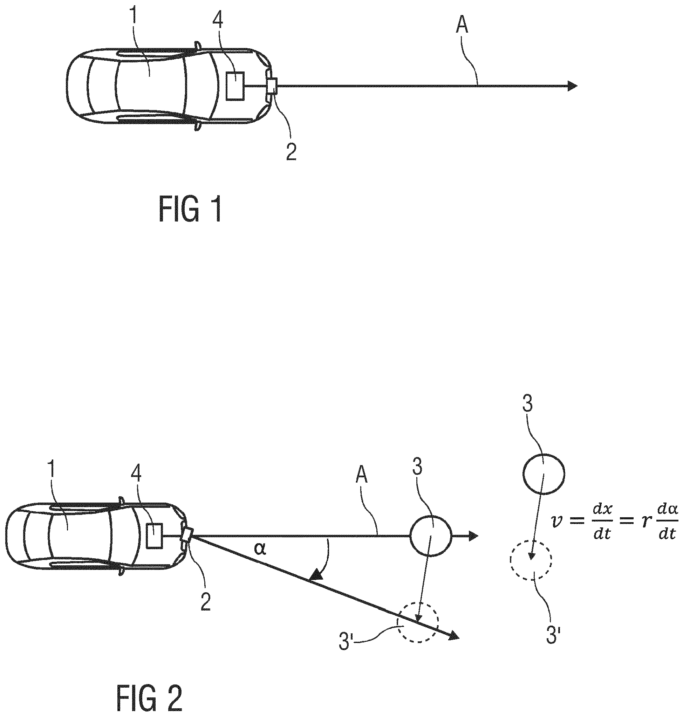

**Figur 1** ist eine schematische Ansicht eines Fahrzeugs 1 im Normalbetrieb. Am Fahrzeug 1 ist mindestens ein Umgebungssensor 2 angeordnet, der in Richtung oder bezüglich einer Fahrzeugachse A ausgerichtet ist. Die Position von Objekten in der Umgebung, die durch den Umgebungssensor 2 detektiert werden, ist korrekt.

**Figur 2** ist eine schematische Ansicht des Fahrzeugs 1 bei einer plötzlichen Änderung der Ausrichtung des Umgebungssensors 2. Beispielsweise weicht die Ausrichtung des Umgebungssensors 2 um einen Winkel, insbesondere Gierwinkel, α von der Fahrzeugachse A ab. Objekte 3 erscheinen daher in der Wahrnehmung des Umgebungssensors 2 versetzt an einer scheinbaren Position 3'. In einem Referenzrahmen, der sich mit dem Fahrzeug 1 fortbewegt, sind Änderungen der Position der Objekte 3 entweder eine Folge einer Eigenbewegung der Objekte 3 oder eine Folge der Änderung der Ausrichtung des Umgebungssensors 2. Plötzliche Änderungen der Ausrichtung erscheinen dem Umgebungssensor 2 als Bewegung der Gesamtanordnung von Objekten 3 in der gleichen Richtung. Die Verschiebung ist r*α, wobei r der radiale Abstand des jeweiligen Objekts 3 zum Umgebungssensor 2 ist. Alle Objekte bewegen sich gleichzeitig mit derselben Winkelgeschwindigkeit dα/dt, insbesondere Azimuthgeschwindigkeit. Diese Bewegung der Gesamtanordnung kann durch algorithmisches Filtern der Winkelgeschwindigkeit dα/dt oder der Sensorposition detektiert werden. Die gleiche Analyse kann auf den Nickwinkel und den Rollwinkel angewandt werden, so dass plötzliche Veränderungen der Ausrichtung für alle möglichen Szenarien detektierbar sind.

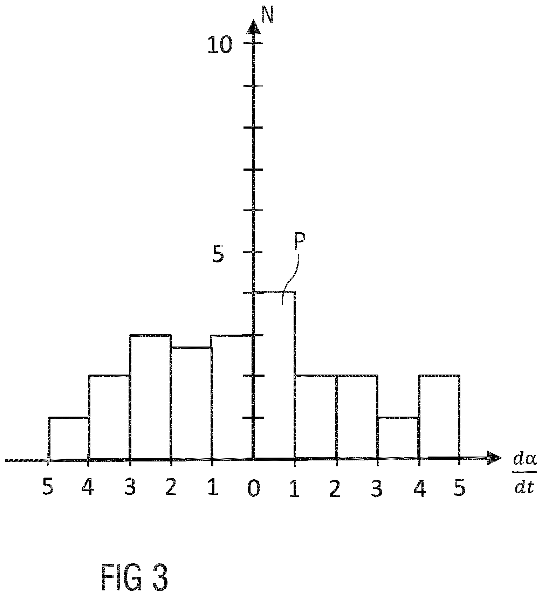

**Figur 3** ist ein schematisches Histogramm zur Darstellung einer Verteilung einer Anzahl N erkannter Objekte über unterschiedliche Winkelgeschwindigkeiten dα/dt im Normalbetrieb des Fahrzeugs 1, das heißt wenn der Umgebungssensor 2 korrekt in Richtung oder bezüglich der Fahrzeugachse A ausgerichtet ist.

Die Winkelgeschwindigkeit dα/dt ist im Referenzrahmen definiert, der sich mit dem Fahrzeug 1 zusammen fortbewegt. Im Normalbetrieb ist in typischen Fahrszenarien die Verteilung breit und um Null zentriert. Die Varianz der Verteilung wird durch die Bewegung der Objekte 3 um das Fahrzeug 1 bestimmt.

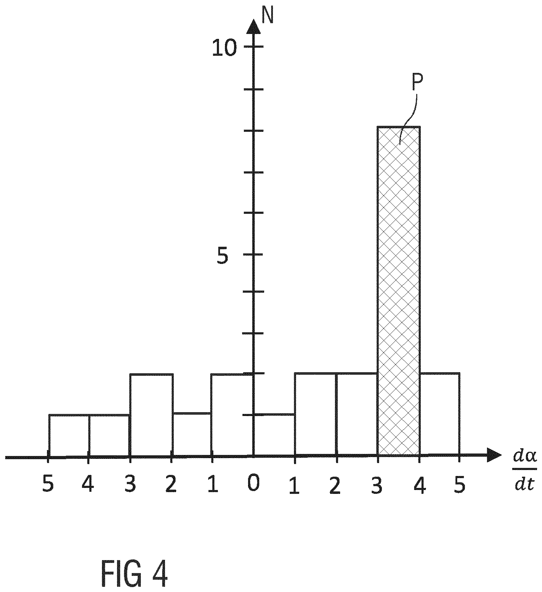

**Figur 4** ist ein schematisches Histogramm zur Darstellung einer Verteilung einer Anzahl N erkannter Objekte über unterschiedliche Winkelgeschwindigkeiten dα/dt bei plötzlicher Änderung der Ausrichtung, das heißt wenn der Umgebungssensor 2 nicht mehr korrekt in Richtung oder bezüglich der Fahrzeugachse A ausgerichtet ist. Aus der Perspektive des Umgebungssensors 2 erscheint eine Verschiebung der Ausrichtung des Umgebungssensors 2 als Bewegung der gesamten Umgebung des Fahrzeugs 1 um den Winkel α. Folglich zeigen alle Perzeptionsdaten eine starke Komponente der Winkelgeschwindigkeiten dα/dt auf, die die reale Bewegung der Umgebung des Fahrzeugs 1 überlagert. Dies erzeugt einen Peak P oder eine Häufung P in der Verteilung, der bzw. die nicht bei Null liegt. Die Größe der Winkelverschiebung ist desto größer, je schneller die Verschiebung stattgefunden hat. Die Detektion einer solchen Häufung P in der Verteilung der Winkelgeschwindigkeiten dα/dt stellt ein effektives Verfahren zur Identifikation einer plötzlichen Änderung der Ausrichtung des Umgebungssensors 2 dar.

Die Ermittlung der Winkelgeschwindigkeiten dα/dt der detektierten Objekte 3 kann durch einen Vergleich von Bewegungsdaten des Fahrzeugs 1 mit vom Umgebungssensor 2 erfassten oder davon abgeleiteten Daten erfolgen. Als Umgebungssensor 2 kann beispielsweise ein Lidar und/oder ein Radar und/oder eine Kamera und/oder ein Ultraschallsensor verwendet werden. Als Bewegungsdaten des Fahrzeugs 1 kann eines oder mehrere aus der folgenden Liste verwendet werden: ein Lenkwinkel, ein Gierwinkel, ein Rollwinkel, ein Nickwinkel, eine Gierbeschleunigung, eine Rollbeschleunigung, eine Nickbeschleunigung, Federwegsignale, Raddrehzahlimpulse, Ortungsdaten und redundante Umfeldsensorik, beispielsweise ein Lidar und/oder ein Radar und/oder eine Kamera und/oder ein Ultraschallsensor.

Das Verfahren kann beispielsweise in einer Datenverarbeitungseinheit 4 durchgeführt werden, die im Fahrzeug 1 angeordnet sein kann.

## Patentansprüche

1. Verfahren zur Detektion einer Dekalibrierung mindestens eines Umgebungssensors (2) zur Erfassung der Umgebung eines Fahrzeugs (1), wobei mit dem Umgebungssensor (2) eine Vielzahl von Objekten (3) in der Umgebung detektiert wird,
**dadurch gekennzeichnet, dass** Winkelgeschwindigkeiten (dα/dt) der detektierten Objekte (3) während der Fahrt des Fahrzeugs (1) ermittelt werden, wobei mittels einer Histogrammauswertung Häufungen (P) einer Anzahl (N) der Objekte (3) bezogen auf die Winkelgeschwindigkeiten (dα/dt) ermittelt werden, wobei dann, wenn eine Häufung (P) abseits einer Winkelgeschwindigkeit (dα/dt) von Null festgestellt wird, auf eine Dekalibrierung des Umgebungssensor (2) geschlossen wird, die durch eine Abweichung der Ausrichtung des Umgebungssensors (2) aus einer Normallage zu einer Fahrzeugachse (A) des Fahrzeugs (1) bedingt ist.

2. Verfahren nach Anspruch 1,
**dadurch gekennzeichnet, dass** als Winkelgeschwindigkeit (dα/dt) eines oder mehrere aus einer Gierwinkelgeschwindigkeit, einer Nickwinkelgeschwindigkeit und einer Rollwinkelgeschwindigkeit ermittelt und der Histogrammauswertung unterzogen werden.

3. Verfahren nach einem der Ansprüche 1 oder 2,
**dadurch gekennzeichnet, dass** die Ermittlung der Winkelgeschwindigkeiten (dα/dt) der detektierten Objekte (3) durch einen Vergleich von Bewegungsdaten des Fahrzeugs (1) mit vom Umgebungssensor (2) erfassten oder davon abgeleiteten Daten erfolgt.

4. Verfahren nach einem der vorhergehenden Ansprüche,
**dadurch gekennzeichnet, dass** als Umgebungssensor (2) ein Lidar und/oder ein Radar und/oder eine Kamera und/oder ein Ultraschallsensor verwendet wird.

5. Verfahren nach einem der Ansprüche 3 oder 4,
**dadurch gekennzeichnet, dass** als Bewegungsdaten des Fahrzeugs (1) eines oder mehrere aus der folgenden Liste verwendet werden: ein Lenkwinkel, ein Gierwinkel, ein Rollwinkel, ein Nickwinkel, eine Gierbeschleunigung, eine Rollbeschleunigung, eine Nickbeschleunigung, Federwegsignale, Raddrehzahlimpulse, Ortungsdaten und redundante Umfeldsensorik.

6. Verfahren nach Anspruch 5,
**dadurch gekennzeichnet, dass** als redundante Umfeldsensorik ein Lidar und/oder ein Radar und/oder eine Kamera und/oder ein Ultraschallsensor verwendet werden bzw. wird.

7. Vorrichtung zur Detektion einer Dekalibrierung mindestens eines Umgebungssensors (2) zur Erfassung der Umgebung eines Fahrzeugs (1), umfassend eine Datenverarbeitungseinheit (4), die mit dem mindestens einen Umgebungssensor (2) verbunden und zur Durchführung des Verfahrens nach einem der vorhergehenden Ansprüche konfiguriert ist.

8. Fahrzeug (1), umfassend eine Vorrichtung nach Anspruch 7 und mindestens einen Umgebungssensor (2) zur Erfassung der Umgebung des Fahrzeugs (1).

9. Fahrzeug (1) nach Anspruch 8,
**dadurch gekennzeichnet, dass** als Umgebungssensor (2) ein Lidar und/oder ein Radar und/oder eine Kamera und/oder ein Ultraschallsensor vorgesehen ist.

10. Fahrzeug (1) nach Anspruch 8 oder 9,
**dadurch gekennzeichnet, dass** zur Erfassung der Bewegungsdaten des Fahrzeugs (1) ein oder mehrere Sensoren zur Erfassung eines oder mehrerer Daten aus der folgenden Liste vorgesehen sind: ein Lenkwinkel, ein Gierwinkel, ein Rollwinkel, ein Nickwinkel, eine Gierbeschleunigung, eine Rollbeschleunigung, eine Nickbeschleunigung, Federwegsignale, Raddrehzahlimpulse, Ortungsdaten und redundante Umfeldsensorik.

## Claims

1. Method for detecting a decalibration of at least one surroundings sensor (2) for capturing the surroundings of a vehicle (1), wherein a plurality of objects (3) in the surroundings are detected by means of the surroundings sensor (2),
**characterized in that** angular velocities (dα/dt) of the detected objects (3) are ascertained while the vehicle (1) is traveling, wherein clusters (P) of a number (N) of the objects (3) are ascertained in relation to the angular velocities (dα/dt) by means of histogram evaluation, wherein if a cluster (P) is identified away from an angular velocity (dα/dt) of zero, it is concluded that the surroundings sensor (2) has been decalibrated, which is caused by a deviation of the alignment of the surroundings sensor (2) from a normal position with respect to a vehicle axis (A) of the vehicle (1).

2. Method according to claim 1,
**characterized in that** one or more of a yaw angular velocity, a pitch angular velocity and a roll angular velocity are ascertained as the angular velocity (dα/dt) and subjected to the histogram evaluation.

3. Method according to either claim 1 or claim 2,
**characterized in that** the angular velocities (dα/dt) of the detected objects (3) are ascertained by comparing movement data of the vehicle (1) with data captured by means of the surroundings sensor (2) or derived therefrom.

4. Method according to any of the preceding claims,
**characterized in that** a lidar and/or a radar and/or a camera and/or an ultrasonic sensor is used as the surroundings sensor (2).

5. Method according to either claim 3 or claim 4,
**characterized in that** one or more from the following list are used as movement data of the vehicle (1): a steering angle, a yaw angle, a roll angle, a pitch angle, a yaw acceleration, a roll acceleration, a pitch acceleration, suspension travel signals, wheel speed pulses, location data and redundant environmental sensor systems.

6. Method according to claim 5,
**characterized in that** a lidar and/or a radar and/or a camera and/or an ultrasonic sensor is/are used as redundant environmental sensor systems.

7. Device for detecting a decalibration of at least one surroundings sensor (2) for capturing the surroundings of a vehicle (1), comprising a data processing unit (4) which is connected to the at least one surroundings sensor (2) and is configured to carry out the method according to any of the preceding claims.

8. Vehicle (1) comprising a device according to claim 7 and at least one surroundings sensor (2) for capturing the surroundings of the vehicle (1).

9. Vehicle (1) according to claim 8,
**characterized in that** a lidar and/or a radar and/or a camera and/or an ultrasonic sensor is provided as the surroundings sensor (2).

10. Vehicle (1) according to either claim 8 or claim 9,
**characterized in that,** in order to capture the movement data of the vehicle (1), one or more sensors are provided for capturing one or more items of data from the following list: a steering angle, a yaw angle, a roll angle, a pitch angle, a yaw acceleration, a roll acceleration, a pitch acceleration, suspension travel signals, wheel speed pulses, location data and redundant environmental sensor systems.

## Revendications

1. Procédé pour la détection d'un décalibrage d'au moins un capteur d'environnement (2) pour la capture de l'environnement d'un véhicule (1), dans lequel une pluralité d'objets (3) est détectée dans l'environnement avec le capteur d'environnement (2),
**caractérisé en ce que** des vitesses angulaires (dα/dt) des objets (3) détectés sont déterminées pendant le déplacement du véhicule (1), dans lequel des fréquences (P) d'un nombre (N) d'objets (3) par rapport aux vitesses angulaires (dα/dt) sont déterminées à l'aide d'une évaluation d'histogramme, dans lequel ensuite, lorsqu'une fréquence (P) est constatée en dehors d'une vitesse angulaire (dα/dt) de zéro, on conclut à un décalibrage du capteur d'environnement (2), qui est dû à une déviation de l'orientation du capteur d'environnement (2) à partir d'une position normale par rapport à un axe de véhicule (A) du véhicule (1).

2. Procédé selon la revendication 1,
**caractérisé en ce que,** comme vitesse angulaire (dα/dt), une ou plusieurs parmi une vitesse angulaire de lacet, une vitesse angulaire de tangage et une vitesse angulaire de roulis sont déterminées et soumises à l'évaluation de l'histogramme.

3. Procédé selon l'une des revendications 1 ou 2,
**caractérisé en ce que** la détermination des vitesses angulaires (dα/dt) des objets (3) détectés s'effectue par une comparaison de données de mouvement du véhicule (1) avec des données captées par le capteur d'environnement (2) ou dérivées de celui-ci.

4. Procédé selon l'une des revendications précédentes,
**caractérisé en ce qu'**un lidar et/ou un radar et/ou une caméra et/ou un capteur à ultrasons est utilisé comme capteur d'environnement (2).

5. Procédé selon l'une des revendications 3 ou 4,
**caractérisé en ce qu'**une ou plusieurs données parmi la liste suivante sont utilisées comme données de mouvement du véhicule (1): un angle de braquage, un angle de lacet, un angle de roulis, un angle de tangage, une accélération de lacet, une accélération de roulis, une accélération de tangage, des signaux de débattement de suspension, des impulsions de vitesse de rotation de roue, des données de localisation et des capteurs d'environnement redondants.

6. Procédé selon la revendication 5,
**caractérisé en ce qu'**un lidar et/ou un radar et/ou une caméra et/ou un capteur à ultrasons est ou sont utilisés comme capteurs d'environnement redondants.

7. Dispositif pour la détection d'un décalibrage d'au moins un capteur d'environnement (2) pour la capture de l'environnement d'un véhicule (1), comprenant une unité de traitement de données (4) connectée à l'au moins un capteur d'environnement (2) et configurée pour la mise en oeuvre du procédé selon l'une des revendications précédentes.

8. Véhicule (1), comprenant un dispositif selon la revendication 7 et au moins un capteur d'environnement (2) pour la capture de l'environnement du véhicule (1).

9. Véhicule (1) selon la revendication 8,
**caractérisé en ce qu'**il est prévu comme capteur d'environnement (2) un lidar et/ou un radar et/ou une caméra et/ou un capteur à ultrasons.

10. Véhicule (1) selon la revendication 8 ou 9,
**caractérisé en ce que,** pour la capture des données de mouvement du véhicule (1), il est prévu un ou plusieurs capteurs pour la capture d'une ou plusieurs données de la liste suivante : un angle de braquage, un angle de lacet, un angle de roulis, un angle de tangage, une accélération de lacet, une accélération de roulis, une accélération de tangage, des signaux de débattement de suspension, des impulsions de vitesse de rotation de roue, des données de localisation et des capteurs d'environnement redondants.
